Europäisches Patentamt

European Patent Office

Office européen des brevets

(11) Numéro de publication: **0 343 588 B1**

## (12) FASCICULE DE BREVET EUROPEEN

(45) Date de publication de fascicule du brevet: **23.12.92**  (51) Int. Cl.⁵: **G02B 6/28**, G02B 6/38

(21) Numéro de dépôt: **89109235.5**

(22) Date de dépôt: **23.05.89**

(54) Coupleur pour groupes de fibres optiques et son procédé de fabrication.

(30) Priorité: **24.05.88 FR 8806879**

(43) Date de publication de la demande:
**29.11.89 Bulletin 89/48**

(45) Mention de la délivrance du brevet:
**23.12.92 Bulletin 92/52**

(84) Etats contractants désignés:
**BE CH ES FR GB IT LI NL**

(56) Documents cités:
**JP-A- 6 313 006**
**US-A- 4 389 428**

**PATENT ABSTRACTS OF JAPAN, vol. 5, no. 1
(P-43)[673], 8 janvier 1981, page 143 P 43; &
JP-A-55 134 813**

**PATENT ABSTRACTS OF JAPAN, vol. 8, no.
137 (P-282)[1574], 26 juin 1984, page 63 P
282; & JP-A-59 37 513**

**PATENT ABSTRACTS OF JAPAN, vol. 6, no.
141 (P-131)[1019], 30 juillet 1982, page 29 P
131; & JP-A-57 62 007**

**ELECTRONICS LETTERS, vol. 21, no. 11, 23
mai 1985, pages 514-515, IEE, Stevenage, GB;**

K. IMOTO et al.: "New biconically tapered
fibre star coupler: Structure and fabrication"

PATENT ABSTRACTS OF JAPAN, vol. 11, no.
308 (P-624)[2755], 8 octobre 1987; & JP-A-62
99 705

(73) Titulaire: **ALCATEL FIBRES OPTIOUES**
**35 rue Jean Jaurès, BP 20**
**F-95871 Bezons Cedex(FR)**

(72) Inventeur: **Hakoun, Roland**
**4 place Raspail**
**F-95330 Domont(FR)**
Inventeur: **Guerin, Philippe**
**40 rue Madeleine Michelis**
**F-92200 Neuilly sur Seine(FR)**
Inventeur: **Resbeut, Jean-Claude**
**9 bis Cité des beaux Vents**
**F-95310 Saint-Ouen l'Aumone(FR)**

(74) Mandataire: **Weinmiller, Jürgen et al**
**Lennéstrasse 9 Postfach 24**
**W-8133 Feldafing(DE)**

## Description

La présente invention concerne un coupleur pour groupes de fibres optiques torsadées et partiellement réunies entre elles par la fusion contrôlée d'une partie de la zone torsadée, comprenant :

a) un enrobage primaire constitué par un tube interieur de silice entourant les groupes de fibres et s'étendant de part et d'autre de la zone torsadée, muni de bouchons de résine synthétique à chacune de ses extrémités,

b) des tubes de protection des groupes de fibres au voisinage des ouvertures d'un boîtier de protection.

On a déjà fabriqué des coupleurs pour groupes de fibres optiques de ce genre, dans lesquels les bouchons de résine synthétique aux extrémités du tube interne de silice étaient en résine adhésive époxy, les extrémités torsadées et la zone fusionnée des groupes de fibres étant noyées dans une résine à l'intérieur de ce tube, comme décrit dans la publication de K. Imoto. Y. Ikuta et M. Maeda, Electronics Letters, vol. 21 n° 11, mai 1985, P 514-515. On disposait alors l'enrobage primaire dans un gros boîtier en aluminium que l'on remplissait de résine silicone; les extrémités des groupes de fibres aux sorties de ce boîtier étaient protégées par des gaînes en polychlorure de vinyle.

De tels coupleurs sont encombrants et ne résistent pas à des conditions d'utilisations sévères, dans une gamme de températures de -55°C à + 125°C requise pour certaines applications.

L'invention a pour but de procurer un coupleur pour groupes de fibres optiques peu encombrant, utilisable dans des conditions d'emploi sévères, à des températures pouvant aller de -55°C à + 125°C, et résistant aux chocs et aux vibrations ainsi qu'à des agents chimiques.

Le coupleur selon l'invention est caractérisé en ce qu'il comporte c) un enrobage secondaire comprenant le boitier de protection, séparé de l'eurobage primaire par une couche de résine silicone, et muni d'ouvertures de sortie des groupes des fibres fermées par des bouchons en résine synthétique et en ce que la résine synthétique des bouchons de son enrobage primaire est une résine polymérisée par rayonnement ultra-violet, en ce que le boîtier de protection de son enrobage secondaire est un tube exterieur muni à ses extrémités de bouchons de résine polymérisée par rayonnement ultra-violet, dans lesquels sont noyées des ferrules et contre-ferrules métalliques de sertissage des extrémités des tubes de protection des groupes de fibres, et en ce que ces tubes de protection sont des gaines extrudées en polytétrafluoréthylène.

De préférence, la couche de résine silicone séparant le tube interieur du tube exterieur est une couche mince disposée uniquement autour de la zone centrale du tube de silice.

Les ferrules et contre-ferrules de sertissage des extrémités des tubes de protection sont de préférence en un métal ou alliage métallique facilement déformable.

Il est décrit ci-après, à titre d'exemple et en référence aux figures schématiques du dessin annexé, un coupleur selon l'invention et son procédé de fabrication.

La figure 1 représente en coupe diamétrale l'ensemble du coupleur.

La figure 2 représente à plus grande échelle le sertissage de l'extrémité d'une gaine de protection des extrémités des groupes de fibres.

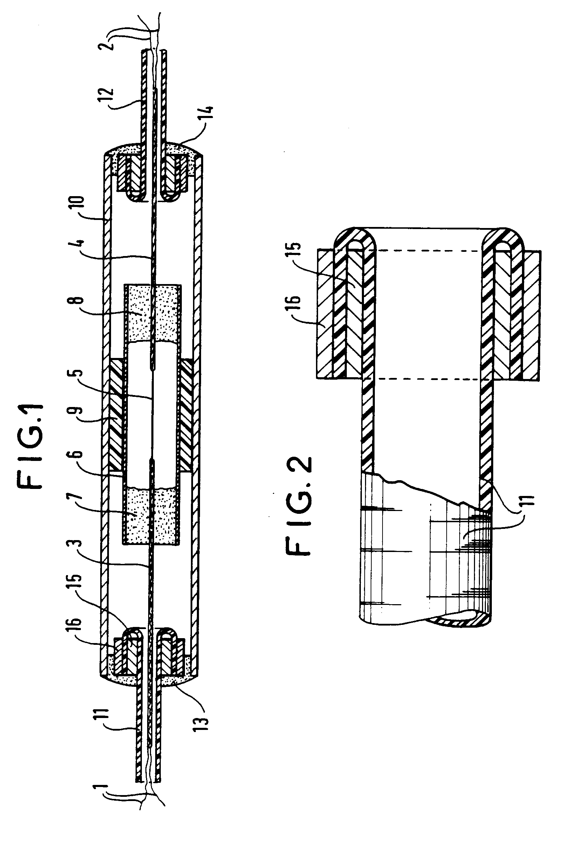

Dans la figure 1, les groupes de fibres multimodes ou monomodes 1 et 2 sont torsadées dans les zones 3, 4, et 5, et partiellement réunies par la fusion contrôlée de la zone centrale 5. Un tube de quartz 6 de faible diamètre est glissé sur la zone fusionnée.

Des bouchons de résine oligoacrylique à faible degré de polymérisation sont introduits aux extrémités de ce tube autour des groupes de fibres. Ces bouchons sont durcis par exposition au rayonnement d'une lampe à ultra-violets. Ils présentent alors un coefficient de dilatation linéaire voisin de celui du quartz, ce qui réduit considérablement le risque qu'ils se désolidarisent du tube de quartz lorsque le coupleur est soumis à de grandes variations de température.

On introduit alors autour de la zone centrale du tube de quartz une gaine 9 d'élastomère silicone, et autour des extrémités des groupes de fibres des gaines extrudées de protection en polytétrafluoréthylène (vendu sous la marque "Téflon") 11, 12. Celles-ci sont inaltérées dans une très large gamme de températures et résistent à la plupart des solvants et agents chimiques. Préalablement, les extrémités des gaines ont été serties entre les ferrules 15 et contre-ferrules 16, en alliage d'aluminium très tendre, comme représenté plus en détail en figure 2.

On glisse ensuite autour de la gaine 9 en silicone entourant le tube de quartz un tube métallique de protection 10, puis en introduit entre les extrémités de ce tube et les extrémités serties des gaines de "Téflon" des bouchons de résine oligoacrylique à faible degré de polymérisation.

On soumet ces bouchons au rayonnement d'une lampe à ultraviolets, assurant leur durcissement par polymérisation. Le sertissage préalable des ferrules et contre-ferrules aux extrémités des gaines de "Téflon" permet d'assurer une bonne adhésion de ces extrémités aux bouchons de résine polyacrylique, le coefficient d'adhérence propre entre le "Téflon" et cette résine étant faible par lui-même.

## Revendications

1. Coupleur pour groupes de fibres optiques (1, 2) torsadées et partiellement réunies par la fusion contrôlée d'une partie de la zone torsadée (5), comprenant :

   a) un enrobage primaire constitué par un tube intérieur de silice (6) entourant les groupes de fibres et s'étendant de part et d'autre de la zone torsadée, muni de bouchons de résine synthétique (7, 8) à chacune de ses extrémités,

   b) des tubes (11, 12) de protection des groupes de fibres au voisinage des ouvertures d'un boîtier de protection, caractérisé en ce qu'il comporte

   c) un enrobage secondaire comprenant le boîtier de protection (10), séparé de l'enrobage primaire par une couche (9) de résine silicone, et muni d'ouvertures de sortie des groupes de fibres fermées par des bouchons en résine synthétique (13, 14), et en ce que la résine synthétique des bouchons (7, 8) de son enrobage primaire est une résine polymérisée par rayonnement ultraviolet, en ce que le boîtier de protection de son enrobage secondaire est un tube extérieur (10) muni à ses extrémités de bouchons (13, 14) de résine polymérisée par rayonnement ultra-violet, dans lesquels sont noyées des ferrules (15) et contre-ferrules métalliques (16) de sertissage des extrémités des tubes de protection des groupes de fibres, et en ce que ces tubes de protection sont des gaines (11, 12) extrudées en polytétrafluoréthylène.

2. Coupleur selon la revendication 1, caractérisé en ce que la couche de résine silicone (9) séparant le tube interieur (6) du tube exterieur (10) est une couche mince disposée uniquement autour de la zone centrale du tube de silice.

3. Coupleur selon la revendication 1, caractérisé en ce que les ferrules (15) et contre-ferrules (16) de sertissage des extrémités des tubes de protection sont en un métal ou alliage métallique facilement déformable.

4. Procédé de fabrication d'un coupleur selon la revendication 1, caractérisé en ce que l'on glisse autour de la zone fusionnée des groupes de fibres un tube interieur de silice (6), en ce que l'on dispose aux extrémités de ce tube autour des groupes de fibres une résine synthétique polymérisable au rayonnement ultra-violet et effectue sa polymérisation, formant ainsi des bouchons d'extrémité (7, 8), en ce que l'on entoure les extrémités des groupes de fibres à proximité des extrémités du tube interieur par des gaines extrudées en polytétrafluoréthylène (11, 12), en ce que l'on sertit les extrémités de ces gaines dans des ferrules (15) et contre-ferrules (16) métalliques, en ce que l'on introduit autour des extrémités serties des gaines un tube de protection (10), en ce que l'on dispose aux extrémités de ce tube autour des extrémités serties des gaines une résine synthétique polymérisable au rayonnement ultra-violet, et en ce que l'on effectue la polymérisation de cette résine, formant ainsi des bouchons (13, 14) à chaque extrémité du tube de protection.

## Claims

1. Coupler for bundles of optical fibres (1, 2) twisted and partially joined together by controlled melting of a part of the twisted area (5) comprising:

   a) a primary covering consisting of a silica inner tube (6) surrounding the bundles of fibre and extending on either side of the twisted area with synthetic resin plugs (7, 8) at each end, and

   b) tubes (11, 12) protecting the bundles of fibres near the openings in the protective casing,

   characterised in that it comprises:

   c) a secondary covering comprising the protective casing (10) separated from the primary covering by a layer (9) of silicone resin and provided with exit openings for the bundles of fibres closed by synthetic resin plugs (13, 14) and in that the synthetic resin of the plugs (7, 8) of its primary covering is a resin polymerised by ultraviolet light, in that the protective casing of its secondary covering is an outer tube (10) fitted at its ends with plugs (13, 14) of resin polymerised by ultraviolet light in which are embedded metal ferrules (15) and counterferrules (16) for crimping the ends of the protective tubes for the bundles of fibres, and in that the protective tubes are extruded polytetrafluoroethylene sheaths (11, 12).

2. Coupler according to claim 1 characterised in that the silicone resin layer (9) separating the inner tube (6) from the outer tube (10) is a thin layer deposited only around the central area of the silica tube.

3. Coupler according to claim 1 characterised in that the ferrules (15) and the counter ferrules (16) for crimping the ends of the protective tubes are made from an easily deformable metal or metal alloy.

4. Method of manufacturing a coupler according to claim 1 characterised in that a silica inner tube (6) is threaded around the melted area of the bundles of fibres, in that a synthetic resin polymerisable by ultraviolet light is disposed at the ends of this tube around the bundles of fibres and polymerised, so forming end plugs (7, 8), in that the ends of the bundles of fibres near the ends of the inner tube are surrounded with extruded polytetrafluoroethylene sheaths (11, 12), in that the ends of these sheaths are crimped into the metal ferrules (15) and the metal counter-ferrules (16), in that a protective tube (10) is fitted around the crimped ends of the sheaths, in that a synthetic resin polymerisable by ultraviolet light is disposed at the ends of this tube around the crimped ends of the sheaths, and in that this resin is polymerised to form plugs (13, 14) at each end of the protective tube.

**Patentansprüche**

1. Koppler für Gruppen von Lichtleitfasern (1, 2) die verdrillt und teilweise durch die kontrollierte Fusion eines Teils des verdrillten Bereichs (5) zusammengefügt sind, mit:
   - einer ersten Umhüllung bestehend aus einem inneren Siliziumoxidrohr (6), das die Fasergruppen umgibt und sich auf beiden Seiten über den verdrillten Bereich hinaus erstreckt, mit Stopfen aus Kunstharz (7, 8) an jedem seiner Enden,
   b) Rohren (11, 12) zum Schutz der Fasergruppen in der Nähe der Öffnungen eines Schutzgehäuses,
   dadurch gekennzeichnet, daß er
   c) eine zweiten Umhüllung aufweist, zu der das Schutzgehäuse (10) gehört und die von der ersten Umhüllung durch eine Schicht (9) aus Silikonharz getrennt ist und mit Auslaßöffnungen für die Fasergruppen versehen ist, die durch Stopfen aus Kunstharz (13, 14) verschlossen werden,
   und daß das Kunstharz der Stopfen (7, 8) der ersten Umhüllung ein durch Ultraviolettstrahlung polymerisiertes Harz ist, daß das Schutzgehäuse der zweiten Umhüllung ein äußeres Rohr (10) ist, das an seinen Enden mit Stopfen (13, 14) aus durch Ultraviolettstrahlung polymerisiertem Harz versehen ist, in die metallische Armaturen (15) und Gegenarmaturen (16) zum Einfassen der Enden der Rohre zum Schutz der Fasergruppen eingetaucht sind, und daß diese Schutzrohre aus Polytetrafluoräthylen extrudierte Hüllen (11, 12) sind.

2. Koppler nach Anspruch 1, dadurch gekennzeichnet, daß die Schicht aus Silikonharz (9), die das innere Rohr (6) vom äußeren Rohr (10) trennt, eine dünne Schicht ist, die nur um den zentralen Bereich des Siliziumoxidrohrs herum angeordnet ist.

3. Koppler nach Anspruch 1, dadurch gekennzeichnet, daß die Armaturen (15) und Gegenarmaturen (16) zum Aufsetzen der Enden der Schutzrohre aus einem leicht verformbaren Metall oder einer Metallegierung sind.

4. Verfahren zur Herstellung eines Kopplers nach Anspruch 1, dadurch gekennzeichnet, daß man um den zerschmolzenen Bereich der Fasergruppen ein inneres Siliziumoxidrohr (6) schiebt, daß man an den Enden dieses Rohrs um die Fasergruppen ein durch Ultraviolettstrahlen polymerisierbares Kunstharz anordnet und es polymerisiert, wodurch Endstopfen (7, 8) entstehen, daß man die Enden der Fasergruppen in der Nähe der Enden des inneren Rohrs mit extrudierten Hüllen aus Polytetrafluoräthylen (11, 12) umgibt, daß man die Enden dieser Hüllen in Armaturen (15) und Gegenarmaturen (16) einfügt, daß man um die eingefaßten Enden der Hüllen ein Schutzrohr (10) einführt, daß man an den Enden dieses Rohrs um die eingefaßten Enden der Hüllen ein durch Ultraviolettstrahlen polymerisierbares Kunstharz anordnet, daß man dieses Harz polymerisiert und so Stopfen (13, 14) an jedem Ende des Schutzrohrs bildet.

FIG.1

FIG.2